# EUROPEAN PATENT APPLICATION

(11) **EP 3 792 803 A1**
(43) Date of publication of application: **17.03.2021**
(21) Application number: 19197346.0
(22) Date of filing: 13.09.2019
(51) Int. Cl.: G06F 21/62

(54) **METHOD AND SYSTEM FOR SECURELY SHARING A DIGITAL FILE**

(71) Applicant: Ydentity Limited, Nottingham, Nottinghamshire NG1 5GF (GB)
(72) Inventor: GERAGHTY, Tom, Nottingham, Nottinghamshire NG1 5GF (GB); HORTON, Jack, Nottingham, Nottinghamshire NG1 5GF (GB)
(74) Representative: Latham, Stuart Alexander

(57) **Abstract**

A computer implemented method, the method comprising: in response to a first user selecting to share a first digital file saved at a first location: extracting information from the first digital file to create a second digital file; encrypting the second digital file using a unique encryption key to create an encrypted digital file; and making the encrypted digital file available only for an access time period; and in response to a second user requesting access the first digital file during the access time period: providing access information to the second user to obtain the second digital file.

## Description

### Field

This invention relates to a computer implemented method and system for enabling a user to securely share a digital file.

### Background

Systems are known for enabling a user to securely share a digital file.

However, the present inventors have devised a new computer implemented method and system that can enable a user to securely share a digital file while having one or more of the following advantages relative to known methods and systems:
- improved security
- reduced likelihood of damage to a digital file

### Summary

By way of an overview, embodiments of the invention relate to a method and system for creating and saving a time-constrained, encrypted copy of a digital file. A digital file can be any file that is capable of being stored electronically; for example, a document, information set, picture, video file, audio file or the like. Encrypting the digital file enables selective access to sensitive information, while making the digital file time-constrained can reduce the likelihood of a malicious user being able to access the encrypted information using a brute-force attack.

In accordance with a first aspect of the present invention, there is provided a computer implemented method, the method comprising:
in response to a first user selecting to share a first digital file saved at a first location:
   extracting information from the first digital file to create a second digital file;
   encrypting the second digital file using a unique encryption key to create an encrypted digital file; and
   making the encrypted digital file available only for a predefined time period; and
in response to a second user requesting access the first digital file during the predefined time period:
   providing access information to the second user to obtain the second digital file.

Thus, the method according to the first aspect enables an owner of digital content to share it, or some of the information contained within it, with third parties in a secure, time-controlled manner. By uniquely encrypting a copy of the digital file and making it accessible only for reasonable time period of time in which an intended recipient would access the information, the likelihood of a malicious user accessing the information can be reduced in comparison to known systems. Moreover, the fact that a copy is shared means that an end user does not have access to the original digital file, and artefacts such as a digital watermark, possibly unique to the share, can be applied to the copy in order to reduce the likelihood of unintended use of the copy.

Extracting information from the first digital file to create the second digital file can comprise duplicating the first digital file to create a third digital file and decrypting the third digital file to create the second digital file. In such embodiments the first digital file can be encrypted using a unique encryption code. Thus, even if a malicious user is able to break the encryption on the encrypted digital file and also locate the first digital file, immediate access to the first digital file will be inhibited by the unique encryption.

Extracting information from the first digital file to create the second digital file can comprise duplicating the first digital file to create the second digital file.

Making the encrypted digital file available only for the access time period can comprise saving the encrypted digital file at a second location which is different from the first location and is accessible for the access time period following which access is not permitted.

The second location can be a virtual storage medium, and the virtual storage medium can be deleted once the access time period elapses.

Making the encrypted digital file available only for the access time period can comprise deleting the encrypted digital file after the access time period has elapsed.

Providing access information to the second user to obtain the second digital file can comprise decrypting the encrypted digital file to create a fourth digital file and transmitting the fourth digital file to the second user. Advantageously, this ensures that no encryption or decryption keys are ever stored in a user device; rather, the decryption key for the second digital file can be stored in the encryption component of the system.

In such embodiments, transmitting the fourth digital file to the second user can comprise presenting a visual and/or audible representation of the digital file to the second user and not sending the fourth digital file as an asset. This can make it more difficult for the second user to retain the information beyond the predefined period as it can be more difficult to copy what has been transmitted.

Providing access information to the second user to obtain the second digital file can comprise transmitting the encrypted digital file to the second user and transmitting means to decrypt the encrypted digital file to the second user.

The access time period can be defined by the first user, or defined by the second user and agreed by the first user.

The method can comprise a step of watermarking the second digital file before step of encrypting the second digital file. The watermark can be any suitable identifier. A plurality of watermarks can be applied to the second digital file in different spatial or temporal locations in order increase security. The watermark can for example comprise a hash of the file.

The first location can be in a first computer storage medium of one or more computing systems forming a distributed computing environment and inaccessible to the first and/or second user(s).

The method can comprise verifying the identity of the first user before extracting information from the first digital file and/or verifying the identity of the second user before providing access information to the second user to obtain the second digital file, wherein verifying the identity of the first and second user comprises multi-factor authentication.

The method can comprise storing a log of at least one of: a user identifier; a timestamp; and/or a hash of the first digital file, the encrypted digital file and/or the third digital file; when one or more of the following occurs: the first digital file is saved at the first location; the encrypted digital file is made available for the access time period; the second user is provided with access information to obtain the second digital file; and the access time period elapses.

The log can be stored in a distributed ledger and/or blockchain environment.

The share request can be initiated by the first user or the second user. Thus, the method can comprise the second user requesting access to the digital file prior to the step of in response to a first user selecting to share a first digital file saved at a first location: extracting information from the first digital file to create a second digital file; encrypting the second digital file using a unique encryption key to create an encrypted digital file; and making the encrypted digital file available only for a predefined time period. In such cases, the second user may suggest a predetermined time, which can be accepted or modified by the first user.

In other embodiments, the share request can be initiated by a third user distinct from the first and second users.

In accordance with a second aspect of the invention there is provided a computer implemented method of recording access to a digital file, the method comprising:
encrypting a digital file with an unique encryption key;
associating the unique encryption key with a recipient of the digital file and optionally the owner of the digital file; and
storing a log of at least one of: the unique encryption key; a timestamp; and/or a hash of the digital file when one or more of the following occurs:
   the encrypted digital file is saved at a memory location;
   the encrypted digital file or a modified version of the encrypted digital file is made available for an access time period;
   the recipient is provided with access information to obtain the encrypted digital file or a modified version of the encrypted digital file; and
   the access time period elapses,
wherein the log can is stored in a blockchain.

Thus, the method according to the second aspect provides an immutable account of actions associated with a digital file without requiring personal information identifying the recipient and/or the owner being recorded in the log, thereby providing a more secure log. The association between the unique encryption key and the recipient and/or owner can be stored in a secure database such that a data breach concerning the digital file can be traced to a particular share by the owner of the secure database, while enabling the log to be more freely disseminated. This can provide more secure interactions between information owners and recipients.

Any suitable blockchain can be used, for example ethereum.

The step of associating can be executed by an association module and the storing the log can be executed by a ledger module distinct from the association module. Thus, the association system can be modular with respect to the blockchain implementation, making the system more scalable.

The method of the second aspect can be applied to the log step of the method of the first aspect.

In accordance with a further aspect of the invention, there is provided a computer readable medium having stored thereon computer executable instructions which, when executed by a computer, carry out the methods of the first and/or second aspects.

In accordance with a further aspect of the invention, there is provided a computing device configured to perform the methods of the first and/or second aspects.

### Brief Description of the Drawings

By way of example only, certain embodiments of the invention will now be described by reference to the accompanying drawings, in which;
Figure 1 is a diagram of a system according to an embodiment of the invention for enabling a user to access a time-constrained, encrypted copy of a digital file; and
Figure 2 is a flow chart illustrating a method according to an embodiment of the invention.

### Detailed Description

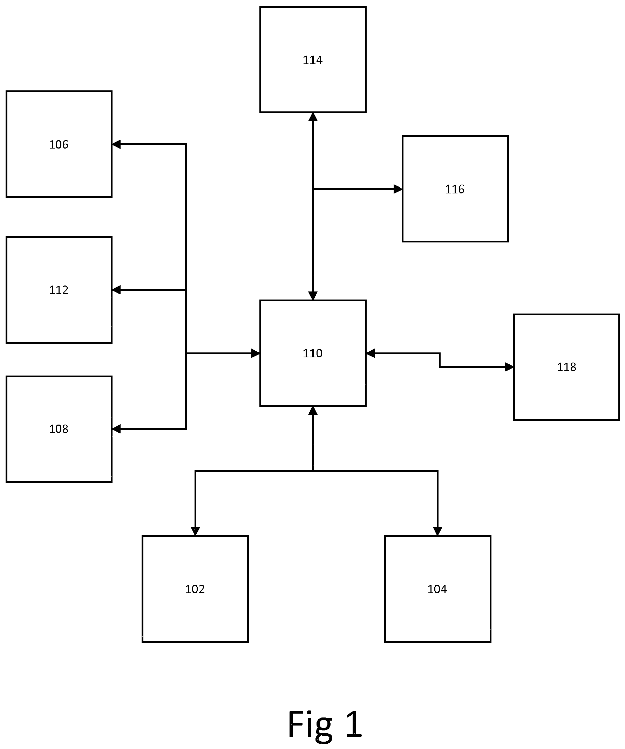

Figure 1 is a diagram of a system 100 according to an embodiment of the invention for enabling a user to share a time-constrained, encrypted copy of a digital file.

The system 100 includes a logic component 110, which comprises one or more processors. The logic component 110 comprises processors in different computing systems, connected to form a distributed computing environment or a "cloud" as it is commonly called. The logic component 110 can be part of a server system, configured to communicate remotely through the internet with users or other components of the system 100. In other embodiments, the logic component can be implemented in a single computing system with a single processor, configured to communicate remotely through the internet with users or other components of the system 100.

The system 100 further comprises a first computer memory 102. The first computer memory 102 is a storage medium located on a single computing system, but in other embodiments it the first computer memory 102 can be distributed in multiple storage mediums in computers connected to form a distributed computing environment. In other embodiments the first computer memory 102 can be a virtual storage and as such files stored in the first computer memory 102 can be segmented in different physical memory mediums. The contents of the first computer memory 102 are not visible or directly accessible to the first or second user.

It is preferred that the first computer memory 102 is encrypted to ensure that users of system 100 cannot directly access the contents of the first computer memory 102. In some embodiments each file stored on the first computer memory 102 may also be individually encrypted with unique encryption keys. This ensures that if a malicious user acquires means to decrypt the first computer memory 102, and/or a file stored on first computer memory 102, the remaining files would still remain safe, as they are encrypted with different encryption keys.

The system 100 further comprises a second computer memory 104 which is architecturally distinct from the first computer memory 102. The second computer memory 104 is a storage medium located on a single computing system, but in some embodiments it can be distributed in multiple storage mediums in computers connected to form a distributed computing environment. In other embodiments, the second computer memory 104 can be virtual memory and as such files stored in the second computer memory 104 can be segmented in different physical memory mediums. The second computer memory 104 can be configured to be wiped once an access time period elapses. In embodiments where the second computer memory 104 is a virtual memory it can be configured to be deleted once the time period elapses. In embodiments where the second computer memory 104 is a virtual memory, data stored in the second computer memory 104 can be physically stored on first computer memory 102 despite the first computer memory 102 and the second computer memory 104 being functionally separate.

The system 100 further comprises an encryption component 106. The encryption component 106 can be any cryptographic module, implemented in hardware or software, that can perform encryption and/or decryption functions when provided with encryption/decryption keys and files to be encrypted/decrypted accordingly. The encryption component 106 can be configured to generate hashes of files stored on the first computer memory 102 or the second computer memory 104.

The system 100 further comprises a secure key component 108. The secure key component 108 can be any computer component that generates and/or safely stores encryption keys according to industry standard methods. In other embodiments the secure key component can be an external system provided by a third party and arranged to interface with system 100, like a Hashicorp vault. In all embodiments, it is preferred for security purposes that the encryption keys are only accessible by the computer implemented method of the invention i.e. the system algorithm and as such an admin user or the like cannot encrypt or decrypt a digital file outside of the defined process of the system.

The encryption keys, used to encrypt and/or decrypt the first computer memory 102 or other files stored on the first computer memory 102 or the second computer memory 104, are stored in secure key component 108 and can be accessible by the logic component 110 or the encryption component 106. In other embodiments the encryption keys can be stored in a system separate to system 100, and obtained by system 100 when needed.

The system 100 further comprises an authentication system 112. The authentication system 112 can verify the identity of users based on at least one of a password, fingerprint, location, voice print, facial capture or other biometric trace.

The encryption component 106, secure key component 108 and authentication system 112 are configured to communicate and exchange information between them and with the logic component 110. If the logic component 110 requires a file to be encrypted or decrypted, the logic component 110 signals the secure key component 108 to provide encryption or decryption keys, which are then obtained by the encryption component 106 along with the file to be encrypted or decrypted.

In some embodiments the encryption component 106, secure key component 108 and authentication system 112 can be implemented in a distributing computing environment. In other embodiments, the encryption component 106, secure key component 108 and authentication system 112 can be combined in a single component that can perform the functions described above in relation to the encryption component 106, secure key component 108 and authentication system 112.

The system 100 further comprises a user front end 114. The user front end 114 is a website accessible through the internet from any user device capable of accessing the internet, like a mobile phone, tablet or the like. The user front end 114 interfaces with a user device to collect authentication data such as a password, fingerprint, location, voice print, facial capture or the like. The user front end 114 enables a first user, who is an information owner to upload a digital file to the system 100. The user front end 114 enables a first user to share a digital file to through the system 100 to a second user, who is an intended recipient of at least some of the information. In other embodiments, the user front end 114 can be an application installed on a user device.

The user front end 114 enables the first user to define an access time period during which a copy of a digital file stored on the first computer memory 102 can be accessible to the second user. For example, the access period may be less than or equal to a year, a month, a week, a day, or in some embodiment a number of hours.

The system 100 further comprises a sharing front end 116. The sharing front end 116 is a website accessible through the internet from any user device capable of accessing the internet like a mobile phone, tablet or the like. The sharing front end 116 may communicate with a user device to collect verification data such as a password, fingerprint, location, voice print, facial capture or the like. The sharing front end 116 enables a second user to access a digital file for an access time period. In other embodiments the sharing front end 116 can be an application installed on a user device. The sharing front end 116 can be implemented in the same website as the user front end 114, or in the same application as the user front end 114.

Preferably the system 100 maintains a log, the log being updated whenever a user interacting with the system. A user interacting with the system 100 can comprise any of a first digital file being saved at the first location; an encrypted digital file being made available for an access time period; another user being provided with access information to obtain a second digital file; and the access time period elapsing. The log stores information can comprise any of a user identifier; a timestamp; and/or a hash of any digital files that were changed in some way.

Preferably the system 100 can exchange information with a distributed ledger 118. The distributed ledger 118 can be a distributed blockchain computing system that includes multiple computing nodes commonly known as a blockchain environment. The system 100 updates the log as described above, maintaining a record whenever an upload, file sharing, file accessing or file deletion occurs and provides that information to the blockchain database. This enables the system to keep detailed information on every action, and maintain evidence for every user interaction. The blockchain database can be based on ethereum blockchain technology, or other similar blockchain technologies. The distributed ledger 118 can be indelible to ensure that a malicious user cannot falsify records.

The above components are described in isolation, however, in some embodiments they can be combined. For example, the share storage can be part of the core storage or the user frontend can be the same as the sharing front end. The skilled person will appreciate that other combinations are possible and included in the scope of the invention.

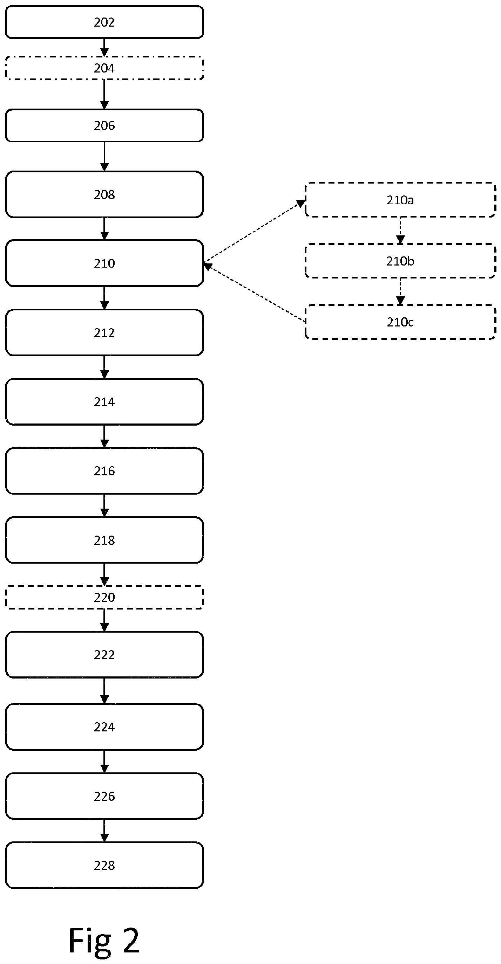

Figure 2 is a flow chart illustrating a method according to an embodiment of the invention. Other embodiments of the invention may omit certain steps or rearrange their order.

At step 202 a first user initiates a sharing process for a first digital file.

In response to step 202, the system proceeds to step 204 wherein the system requires the first user to verify their identity to proceed. In some embodiments the system may not require the first user to verify their identity prior to proceeding to 206, if for example the first user has already verified their identity.

At step 206 the first user selects the first digital file that they wish to share with a second user and the access time period for which the file will be accessible by the second user.

At step 208 the system retrieves the first digital file from a first location. The first location is part of the first computer memory 102.

At step 210 the system processes the first digital file to extract information that is used to create a second digital file. The second digital file can be an exact copy of the first digital file, or it can a processed copy comprising some or all of the information present in the first digital file. The second digital file can also be processed to include a digital watermark or the like to enable the first user to identify the second digital file as having been created to be shared with the second user. The watermark can for example comprise a hash of the file and a plurality of discrete, different watermarks can applied to the second digital file with spatial or temporal displacement to increase security.

Preferably the first digital file is individually encrypted with a unique key. If the first digital file is encrypted, the process proceeds to step 210a to create a copy of the first digital file, the copy being a third digital file. The third digital file, being a copy, is also encrypted. At step 210b the system 100 obtains a decryption key for the third digital file from the secure key component 108. In other embodiments the decryption key for the third digital file can be obtained from an external system provided by a third party and arranged to interface with system 100, like a Hashicorp vault. The unique decryption key for the third digital file is the same as the encryption key for the first digital file when symmetric cryptography is used. In other embodiments however, asymmetric cryptography can be employed, and the unique decryption key for the third digital file can be different to the encryption key used to encrypt the first digital file. At step 210c the system decrypts the third digital file and creates the second digital file.

If the first digital file has not been encrypted, the method can skip steps 210a-210c, and proceed from 210 to 212. In that case, the second digital file is a duplicate of the first digital file.

At step 212 the system obtains a unique encryption key to encrypt the second digital file.

At step 214 the second digital file is encrypted, creating a uniquely encrypted digital file. The unique encryption key is obtained from the secure key component 108. In other embodiments the encryption key can be obtained from an external system provided by a third party and arranged to interface with system 100, like a Hashicorp vault.

At step 216 the encrypted digital file is saved at a second location which is different from the first location and is accessible for the access time period following which access is not permitted. The second location is part of the second computer memory 104. The second computer memory 104 is a unique virtual storage and can be created during step 216 especially for saving the encrypted digital file in a time-constrained manner. After the access time period elapses the second computer memory 104 is deleted to ensure that users cannot access the contents of the second computer memory 104.

In other embodiments, other means can be employed to ensure that the encrypted digital file is available only for the access time period; for example, the encrypted digital file can be deleted from a memory after the access time period has elapsed, or the system 100 can maintain the encrypted digital file but only transmit or process it further if it is determined that the access period has not elapsed. It is preferred that the file is deleted after the access time period has expired because this provides a robust security layer over the asset in question.

Step 216 can also include the second user being provided with information such as a hyperlink that enables the second user to find the second location and thus the second digital file.

The second computer memory 104 need not be an encrypted memory. Thus, the second user can directly access the second digital file when the second location is known. However the second computer memory 104 can be encrypted to ensure that a user cannot directly access the contents of the second computer memory 104.

At step 218 the second user requests access to the first digital file.

In response to step 218, at step 220, the system requires the second user to verify their identity for the process to continue. In some embodiments the identity of the second user may have been verified in a separate process, such as with a link sent only to the second user, in which case the process skips step 220 and continues to step 222.

At step 222 the system 100 checks if the request by the second user for the first digital file is made during the access time period defined by the first user in 206. If the access time period has not elapsed then the process continues to step 224. If the access time has elapsed then the second digital file will have been made unavailable as described above and the system may for example provide a message to this effect to the second user.

At step 224 the system 100 provides access information to the second user to obtain the second digital file. Providing access information comprises steps 224-228 and includes obtaining a unique decryption key for the encrypted digital file. The unique decryption key is obtained from the secure key component 108, but in other embodiments the unique decryption key can be obtained from an external system provided by a third party and arranged to interface with system 100, like a Hashicorp vault. In some embodiments the unique decryption key can be the unique encryption key of 212 and 214.

At step 226 the encrypted digital file is decrypted with the unique decryption key resulting in a third digital file.

The third digital file is transmitted to the second user at step 228.

Preferably the system can decrypt the encrypted digital file and third digital file can comprise a visual and/or audible representation of the second digital file that is presented through the system such that there is no complete file transmitted for download and storage by the second user.

Advantageously, the method according to embodiment of the invention enables a first user to share securely a digital file with a second user, without encryption or decryption keys ever being stored in a user device. Furthermore, the method enables a user to share copies, which can be digitally watermarked, in a time-constrained manner.

In other embodiments, step 226 can comprise transmitting the encrypted digital file to the second user and step 228 can comprise transmitting means to decrypt the encrypted digital file to the second user. The means to decrypt the encrypted digital file comprises decryption keys when asymmetric cryptography is used. Alternatively, if symmetrical cryptography is used, the means to decrypt the encrypted digital file can comprise the encryption key used to encrypt the encrypted digital file.

Verification of the first user in step 204 or of the second user in step 220 can be achieved through authentication system 112. In some embodiments, the user can be prompted for authentication data comprising any one of a password, a facial scan, a fingerprint or other biometric indicators. In some embodiments, the authentication system 112 may use the location of the user to verify their identity. The logic component 110 communicates information extracted by the verification data, which may include hashes, pointers, or anonymous identifiers to authentication system 112, which in response may verify the user's identity.

It should be noted that the above-mentioned embodiments illustrate rather than limit the invention, and that those skilled in the art will be capable of designing many alternative embodiments without departing from the scope of the invention as defined by the appended claims.

## Claims

1. A computer implemented method, the method comprising:
in response to a first user selecting to share a first digital file saved at a first location:
extracting information from the first digital file to create a second digital file;
encrypting the second digital file using a unique encryption key to create an encrypted digital file; and
making the encrypted digital file available only for an access time period; and
in response to a second user requesting access the first digital file during the access time period:
providing access information to the second user to obtain the second digital file.

2. A computer implemented method according to claim 1 wherein extracting information from a first digital file to create a second digital file comprises:
duplicating the first digital file to create a third digital file; and
decrypting the third digital file to create the second digital file.

3. A computer implemented method according to claim 1 wherein extracting information from a first digital file to create a second digital file comprises duplicating the first digital file to create the second digital file.

4. A computer implemented method according to any of claims 1-3 wherein making the encrypted digital file available only for the access time period comprises saving the encrypted digital file at a second location which is different from the first location and is accessible for the access time period following which access is not permitted.

5. A computer implemented method according to claim 4 wherein the second location is a virtual storage medium, the virtual storage medium being deleted after the time period elapses.

6. A computer implemented method according to any of claims 1-5 wherein making the encrypted digital file available only for the access time period comprises deleting the encrypted digital file after the access time period has elapsed.

7. A computer implemented method according to any of claims 1-6 wherein providing access information to the second user to obtain the second digital file comprises:
decrypting the encrypted digital file to create a fourth digital file; and
transmitting the fourth digital file to the second user.

8. A computer implemented method according to any of claims 1-6 wherein providing access information to the second user to obtain the second digital file comprises:
transmitting the encrypted digital file to the second user; and
transmitting means to decrypt the encrypted digital file to the second user.

9. A computer implemented method according to any of the preceding claims wherein the access time period is defined by the first user.

10. A computer implemented method according to any of the preceding claims further comprising digitally watermarking the second digital file before encrypting the second digital file to create the encrypted digital file.

11. A computer implemented method according to any of the preceding claims wherein neither the first nor the second user have access to the first location, the first location being in a first computer storage medium of one or more computing systems forming a distributed computing environment.

12. A computer implemented method according to any of the preceding claims further comprising verifying the identity of the first user before extracting information from the first digital file and/or verifying the identity of the second user before enabling the second user to obtain the second digital file, wherein verifying the identity of the first and/or second user comprises multi-factor authentication.

13. A computer implemented method according to any of the preceding claims further comprising storing a log of at least one of: a user identifier; a timestamp; and/or a hash of the first digital file, the encrypted digital file and/or the third digital file;
when one or more of the following occurs: the first digital file is saved at the first location; the encrypted digital file is made available for the access time period; the second user is provided with access information to obtain the second digital file; and the access time period elapses.

14. A computer implemented method according to claim 13 wherein the log is stored in a distributed ledger and/or blockchain.

15. A computer implemented method according to any of the preceding claims wherein the unique encryption key is generated by and stored in a secure key component.
